# EUROPEAN PATENT SPECIFICATION

(11) **EP 1 952 965 B1**
(45) Date of publication and mention of the grant of the patent: **21.07.2010**
(21) Application number: 08150809.5
(22) Date of filing: 29.01.2008
(51) Int. Cl.: B29C 45/16, F02M 35/104

(54) **Method for producing a hollow part made of at least two portions, and part obtained**
Verfahren zur Herstellung eines Hohlkörpers aus mindestens zwei Teilen und durch das Verfahren gewonnener Körper
Procédé pour la production d'une pièce creuse formée d'au moins deux parties, et partie obtenue

(30) Priority: 31.01.2007 FR 0700677
(43) Date of publication of application: 06.08.2008
(73) Proprietor: MARK IV SYSTEMES MOTEURS (SAS), 92300 Levallois Perret (FR)
(72) Inventor: Menin, Denis, 68910 Labaroche (FR); Germain, Laurent, 88000 Jeuxey (FR); Verchere, Lionel, 68040 Ingersheim (FR)
(74) Representative: Nuss, Laurent

(56) References cited:
- DE-A1- 3 820 814
- DE-C1- 4 239 909
- US-A- 5 375 569
- US-A1- 2004 071 807

## Description

The present invention relates to the field of hollow parts made of thermoplastic material and to methods for the production thereof, more specifically to hollow parts of the aforementioned type formed from at least two portions joined together in a tight manner.

The present invention relates to a method for producing a part of this type and also to a part obtained using this method.

Currently, hollow parts of this type, intended for example to contain a liquid or gaseous fluid, are generally produced by separate manufacture of the two constituent portions, then joining together of said portions in the region of assembly interfaces, usually respective peripheral edges of said portions having cooperating complementary shapes.

These two portions are generally assembled in the region of their opposing edges, a seal being produced at the same time, by one of the following four assembly method variations:
- vibration welding,
- adhesion,
- screwing or similar mechanical connection with compression of a seal,
- production of an overmould, in the region of the adjacent edges, the attached overmoulded material forming the mechanical connection and the seal between the two opposing edges, see e.g. DE-C-4 239 909.

The problem posed to the present invention is that of providing a new embodiment of hollow parts of the aforementioned type, with improved assembly and sealing performance levels, which requires fewer production operations, which uses no additional element or material other than the two portions to be assembled and which is more economical.

The invention solves this problem using a method for producing a hollow part according to claim 1. A hollow part according to the invention is defined in claim 13.

A better understanding of the invention will be facilitated by the following description which relates to preferred embodiments given by way of non-limiting examples and explained with reference to the appended schematic drawings, in which:
Figures 1 to 5 are localised cross-sections of various variations of the assembly edges of two portions of a hollow part obtained by way of the production method according to the invention, and
Figures 6A, 6B and 6C are respectively a perspective view, a view from above and a cross-section (along the line B-B in Figure 6B) of an intake manifold produced using the method according to the invention and comprising an assembly zone configured in accordance with the variation of Figure 1 (detail D in Figure 6C).

The production method according to the invention consists mainly in producing a first portion 2 by moulding of a first thermoplastic material, this first portion 2 comprising at least one rib or ridge 5 protruding in the region of its edge 3 or its assembly edge portion, then in producing a second portion 2' by moulding onto the first portion 2 of a second thermoplastic material, with at least partial overmoulding of the edge or the assembly edge portion 3 of the first portion 2 by the second material mass forming the edge 3' or the assembly edge portion of the second portion 2', or an extension 6 of this edge 3, said second material entirely covering said at least one rib or ridge 5.

In order to obtain, in addition to the mechanical locking resulting from the overmoulding, connection by chemical adherence in the region of the interfaces between the materials forming the two portions 2 and 2', the amount of heat conveyed by the second material mass forming the edge 3' or the assembly edge portion of the second portion 2', or an extension 6 of this edge 3, and entering into contact with said at least one rib or ridge 5, is sufficient to obtain at least partial melting of the material forming this or each rib or ridge 5, preferably in the region of its free end 5'.

By regulating the time interval separating the end of the moulding of the first portion 2 from the start of the moulding of the second portion 2' and also the temperature and the amount of the overmoulded material attached in the region of the assembly zone 4, it is possible to achieve in a targeted manner either mere softening of the ribs or ridges 5, their shape being maintained and with melting solely at the surface thereof, or more pronounced and quantitively greater melting of the constituent material thereof, with sensitive modification of their original shape and, if appropriate, interpenetration and mixing of the two constituent materials in the region of the mutual interface thereof (thus also strengthening the mechanical and physical connection between the two portions 2 and 2').

The aforementioned provisions can be reinforced by providing that the first and second thermoplastic materials are mutually compatible and of the same type, that the or each rib or ridge 5 having a profiled structure is formed integrally with the edge or the assembly edge portion 3 of the first portion 2 by having a configuration such that its outer surface area visible before overmoulding is large compared to its volume.

Moreover, the base 5" of the ridge or rib 5, which adjoins the edge or the edge portion 3, has a widened shape or cross-section relative to the remainder of the rib or ridge 5 in question, in order to ensure that the rib or ridge 5 in question remains integral with the first portion 2.

The contribution of heat during the overmoulding also affects the remaining surface area of the edge 3 brought into contact with the second injected hot material and can be sufficient thus partially to melt a layer of surface material in this region, increasing in this way the adherence between the two portions 2 and 2'.

In order to promote the phenomenon of melting of the first material for the regions of the rib or ridge 5 penetrating most deeply into the mass of the second overmoulded material, the or each rib or ridge 5 has, in section along a plane perpendicular to its profiled extension direction, a shape tapered from its base 5" adjoining the edge or the edge portion 3 toward its free end 5'.

The or each rib or ridge 5 has a substantially prismatic shape, with a cross-section in the shape of a triangle, preferably an isosceles triangle.

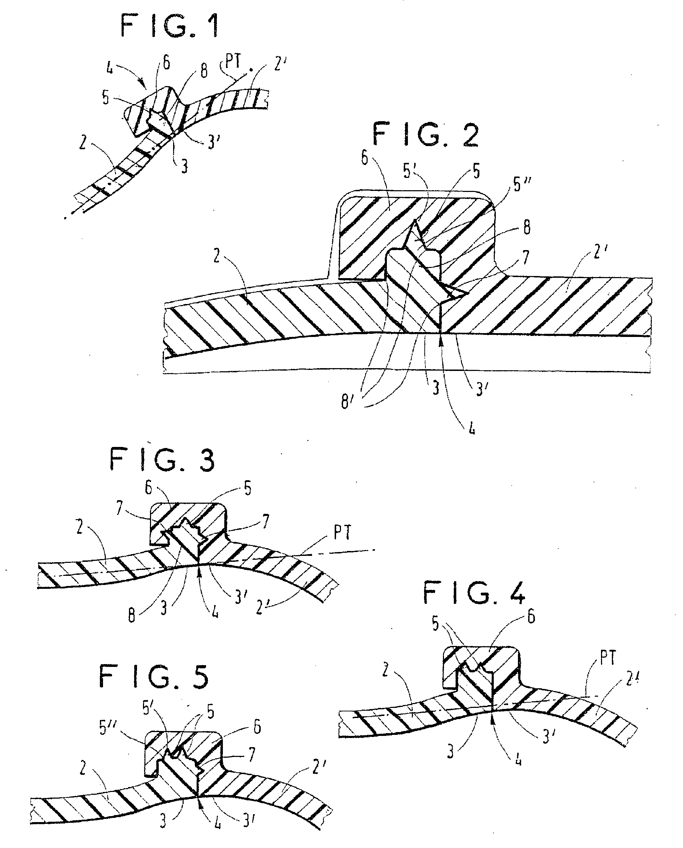

In the case of a hollow part 1 intended for the circulation of gaseous or liquid fluid, the internal façade of the wall of this part 1 will preferably be continuous, i.e. without indentation, projection or a difference in level in the region of the assembly zone 4 (Figures 1 to 6).

In accordance with a first variation of the invention emerging from Figures 1 to 3 and 6, the edge or the assembly edge portion 3 of the first portion 2 comprises a ridge or rib 5 protruding outward, preferably in a direction substantially perpendicular to the tangential or median plane PT of the wall of the hollow part 1 in the region of the assembly zone 4.

In order to reinforce the degree of strength and tightness between the two portions 2 and 2' in the region of the assembly zone 4 and in accordance with a second variation of the invention illustrated in Figures 4 and 5, it can be provided that the edge or the assembly edge portion 3 of the first portion 2 comprises at least two ridges or ribs 5 substantially mutually parallel in their longitudinal extension and protruding outward, preferably in a direction substantially perpendicular to the tangential or median plane PT of the wall of the hollow part 1 in the region of the assembly zone 4.

Each rib or ridge 5 according to the two variations referred to hereinbefore is thus subjected to a shear force in the event of application of a stress tending to separate the two portions 2 and 2', in particular under the action of internal pressure in the hollow part 1 (hence the benefit of a widened base 5").

According to an additional feature emerging from Figures 2, 3 and 5, at least one additional rib or ridge 7 is also formed in the region of the edge 3 or the assembly edge portion 3 of the second portion 2, this or each additional rib or ridge 7 protruding in a direction substantially parallel to or comprised within the tangential or median plane PT of the wall of the hollow part 1 in the region of the assembly zone 4.

Each additional rib or ridge 7 can be directed toward or away from the second portion 2' and will mechanically secure the edge 3' of the second portion 2' relative to the first portion 2 in the direction of extension of the other rib(s) or ridge(s) 5.

Each rib or ridge 5 and/or 7 preferably extends continuously over the entire periphery of the edge 3 of the first portion 2 but can also extend discontinuously merely over one or more portion(s) of this periphery, the connection in the region of the remaining portions of the assembly zone 4 between the two constituent portions 2 and 2' of the part being produced by other means in the absence of the assembly according to the invention.
It can thus be provided that at least one region of the first portion 2 is formed with a recess, a passage, a cavity or the like 9, and the second thermoplastic material penetrates this recess or the like 9 during the moulding of the second portion 2', to produce a tight mechanical connection to the first portion 2.

According to a particularly preferred embodiment of the invention emerging from the appended drawings, the edge or the assembly edge portion 3 of the first portion 2 is formed with a thickening 8 forming an outwardly directed rim, the rib(s) or ridge(s) 5 being formed integrally on and with this rim 8, optionally on a plurality of faces 8' thereof, the edge or the assembly edge portion 3' of the second portion 2' being formed integrally with a lateral extension 6 in the form of a covering wing, engaging by overmoulding at least partially, preferably completely, above said thickening 8 in order to form a lock-on connection.

Thus, the edges 3 and 3' produce a shape-mating lock-on connection simply by virtue of their general shape.

Moreover, the provision of a thickening 8 in the region of the edge 3 increases the mechanical strength of said edge and provides a larger abutment surface area in the region of the assembly zone 4.

Obviously, the two portions 2 and 2', in the form of shell-shaped portions, can be produced in two different moulds, the first portion 2 being transferred from a first mould to a second mould and the second portion 2' being overmoulded (an interval for solidification/cooling of the first portion 2 being allowed for).

However, according to an economically highly advantageous variation, the operation of moulding the first portion 2 of the part 1 and the subsequent operation of overmoulding the second portion 2' are carried out in the same mould, said mould being provided with two separate moulding sites, of suitable matching shapes, or with a moulding cavity having a configuration which can be modified or varied in a controlled manner.
Although the invention has been described above in relation to the production of a hollow part consisting of two portions 2 and 2', it can obviously also apply to the production of a part 1 consisting of three or more portions, by repeating the overmoulding operation, a third portion being formed over the assembly formed by the first and second portions 2 and 2'.

In the application, the method can then consist in forming the second portion 2' with a second edge or assembly edge portion provided with at least one protruding rib or ridge 5 and, after moulding of the second portion 2' with connection to the first portion 2 by overmoulding, in moulding a third portion onto said second portion 2', with at least partial overmoulding of said second edge or said second assembly edge portion of the second portion by the material mass forming an edge or an assembly edge portion of said second portion, this material mass entirely covering said at least one rib or ridge of said second edge or said second assembly edge portion of said second portion 2' (not shown).

The invention also relates to a hollow part made of thermoplastic material(s) preferably obtained using the production method described hereinbefore and consisting of two portions joined together along respective adjacent edges or at least portions of such edges, producing at the same time a seal in the region of the assembly zone.

This part 1 is characterised in that the first portion 2 consists of a moulded portion made of a first thermoplastic material and comprising at least one rib or ridge 5 protruding in the region of its edge or its assembly edge portion 3 and in that the second portion 2' consists of a moulded portion made of a second thermoplastic material, the second material mass forming the edge or the assembly edge portion 3' of the second portion 2', or an extension 6 of this edge 3' overmoulding at least partially the edge or the assembly edge portion 3 of the first portion 2, said second material entirely covering said at least one rib or ridge 5.

The first and second materials can, for example, consist of PA6GF30 or PA66GF35, the melting point of the second material advantageously being equal to or slightly higher than the melting point of the first material.

During the injection of the material forming the second portion, via a limited number of injection orifices, this material will have a temperature and fluidity sufficient to cover the entire assembly interface of the first portion and at least partially to melt said at least one ridge.

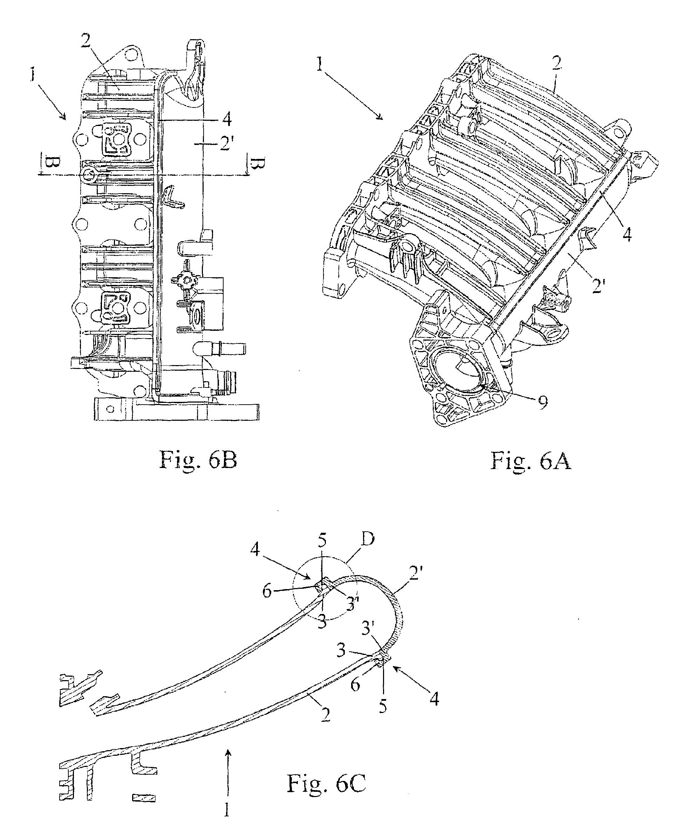

As shown in Figures 6A, 6B and 6C, said part advantageously consists of an intake manifold or distributor for a vehicle having an internal-combustion engine.

Obviously, the invention is not limited to the embodiments described and illustrated in the appended drawings. Modifications are possible, in particular with regard to the constitution of the various elements or by substitution of technical equivalents, without thereby departing from the scope of protection of the invention as defined in the appended claims.

## Claims

1. Method for producing a hollow part formed from at least two portions joined together along respective adjacent edges, or at least portions of such edges, producing at the same time a seal in the region of the assembly zone, the method consisting in producing a first portion (2) by moulding of a first thermoplastic material, this first portion (2) comprising at least one rib or ridge (5) protruding in the region of its edge (3) or its assembly edge portion, then in producing a second portion (2') by moulding onto the first portion (2) of a second thermoplastic material, with at least partial overmoulding of the edge or the assembly edge portion (3) of the first portion (2) by the second material mass forming the edge (3') or the assembly edge portion of the second portion (2'), or an extension (6) of this edge (3), said second material entirely covering said at least one rib or ridge (5), the method being **characterised in that** the first portion (2) is produced with the or each rib or ridge (5) having a substantially prismatic shape with a cross-section in the shape of a triangle.

2. Production method according to claim 1, **characterised in that** the amount of heat conveyed by the second material mass forming the edge (3') or the assembly edge portion of the second portion (2'), or an extension (6) of this edge (3), and entering into contact with said at least one rib or ridge (5), is sufficient to obtain at least partial melting of the material forming this or each rib or ridge (5), preferably in the region of its free end (5').

3. Production method according to claim 1 or 2, **characterised in that** the first and second thermoplastic materials are mutually compatible and of the same type, **in that** the or each rib or ridge (5) having a profiled structure is formed integrally with the edge or the assembly edge portion (3) of the first portion (2) by having a configuration such that its outer surface area visible before overmoulding is large compared to its volume and that its base (5") adjoining the edge or the edge portion (3) has a widened shape or cross-section relative to the remainder of the rib or ridge (5) in question.

4. Production method according to any one of claims 1 to 3, **characterised in that** the or each rib or ridge (5) has, in section along a plane perpendicular to its profiled extension direction, a shape tapered from its base (5") adjoining the edge or the edge portion (3) toward its free end (5').

5. Production method according to any one of claims 1 to 4, **characterised in that** the or each rib or ridge (5) has a cross-section in the shape of an isosceles triangle.

6. Production method according to any one of claims 1 to 5, **characterised in that** the edge or the assembly edge portion (3) of the first portion (2) comprises a ridge or rib (5) protruding outward, preferably in a direction substantially perpendicular to the tangential or median plane (PT) of the wall of the hollow part (1) in the region of the assembly zone (4).

7. Production method according to any one of claims 1 to 5, **characterised in that** the edge or the assembly edge portion (3) of the first portion (2) comprises at least two ridges or ribs (5) substantially mutually parallel in their longitudinal extension and protruding outward, preferably in a direction substantially perpendicular to the tangential or median plane (PT) of the wall of the hollow part (1) in the region of the assembly zone (4).

8. Production method according to any one of claims 6 and 7, **characterised in that** at least one additional rib or ridge (7) is also formed in the region of the edge (3) or the assembly edge portion (3) of the first portion (2), this or each additional rib or ridge (7) protruding in a direction substantially parallel to or comprised within the tangential or median plane (PT) of the wall of the hollow part (1) in the region of the assembly zone (4).

9. Production method according to any one of claims 1 to 8, **characterised in that** the edge or the assembly edge portion (3) of the first portion (2) is formed with a thickening (8) forming an outwardly directed rim, the rib(s) or ridge(s) (5) being formed integrally on and with this rim (8), optionally on a plurality of faces (8') thereof, the edge or the assembly edge portion (3') of the second portion (2') being formed integrally with a lateral extension (6) in the form of a covering wing, engaging by overmoulding at least partially, preferably completely, above said thickening (8) in order to form a lock-on connection.

10. Production method according to any one of claims 1 to 9, **characterised in that** at least one region of the first portion (2) is formed with a recess, a passage, a cavity or the like (9), and **in that** the second thermoplastic material penetrates this recess or the like (9) during the moulding of the second portion (2').

11. Production method according to any one of claims 1 to 10, **characterised in that** the operation of moulding the first portion (2) of the part (1) and the subsequent operation of overmoulding the second portion (2') are carried out in the same mould, said mould being provided with two separate moulding sites, of suitable matching shapes, or with a moulding cavity having a configuration which can be modified or varied in a controlled manner.

12. Production method according to any one of claims 1 to 11, **characterised in that** it consists in forming the second portion (2') with a second edge or assembly edge portion provided with at least one protruding rib or ridge (5) and, after moulding of the second portion (2') with connection to the first portion (2) by overmoulding, in moulding a third portion onto said second portion (2'), with at least partial overmoulding of said second edge or said second assembly edge portion of the second portion by the material mass forming an edge or an assembly edge portion of said second portion, this material mass entirely covering said at least one rib or ridge of said second edge or said second assembly edge portion of said second portion (2').

13. Hollow part made of thermoplastic material(s) preferably obtained using the production method according to any one of claims I to 12 and consisting of two portions joined together along respective adjacent edges or at least portions of such edges, producing at the same time a seal in the region of the assembly zone, wherein the first portion (2) consists of a moulded portion made of a first thermoplastic material and comprising at least one rib or ridge (5) protruding in the region of its edge or its assembly edge portion (3) and wherein the second portion (2') consists of a moulded portion made of a second thermoplastic material, the second material mass forming the edge or the assembly edge portion (3') of the second portion (2'), or an extension (6) of this edge (3') overmoulding at least partially the edge or the assembly edge portion (3) of the first portion (2), said second material entirely covering said at least one rib or ridge (5), the hollow part being **characterised in that** the or each rib or ridge (5) has a substantially prismatic shape with a cross-section in the shape of a triangle.

14. Hollow part according to claim 13, **characterised in that** it consists of an intake manifold or distributor for a vehicle having an internal-combustion engine.

## Patentansprüche

1. Verfahren zur Herstellung eines Hohlkörpers, der aus mindestens zwei Teilen gebildet wird, die entlang ihrer benachbarten Kanten oder mindestens Abschnitten dieser Kanten zusammengefügt werden, wobei gleichzeitig eine Abdichtung im Bereich der Fügezone erzeugt wird, wobei das Verfahren darin besteht, einen ersten Teil (2) durch Formen eines ersten thermoplastischen Materials herzustellen, wobei dieser erste Teil (2) mindestens eine Rippe oder Wulst (5) umfasst, die im Bereich seiner Kante (3) oder seines Fügekantenabschnitts hervorsteht, dann einen zweiten Teil (2') durch Anformen eines zweiten thermoplastischen Materials auf den ersten Teil (2) herzustellen, wobei die Kante oder der Fügekantenabschnitt (3) des ersten Teils (2) von der zweiten Materialmasse mindestens teilweise überformt wird, so dass die Kante (3') oder der Fügekantenabschnitt des zweiten Teils (2') oder eine Verlängerung (6) dieser Kante (3) gebildet wird, wobei das zweite Material die mindestens eine Rippe oder Wulst (5) vollständig bedeckt,
wobei das Verfahren **dadurch gekennzeichnet ist, dass** der erste Teil (2) so hergestellt wird, dass jede Rippe oder Wulst (5) im Wesentlichen eine Prismenform aufweist, deren Querschnitt dreieckförmig ist.

2. Herstellungsverfahren nach Anspruch 1, **dadurch gekennzeichnet, dass** die von der zweiten Materialmasse, die die Kante (3') oder den Fügekantenabschnitt des zweiten Teils (2') oder eine Verlängerung (6) dieser Kante (3) bildet, transportierte und mit der mindestens einen Rippe oder Wulst (5) in Kontakt tretende Wärmemenge ausreichend ist, um ein mindestens teilweises Aufschmelzen des Materials, das diese oder jede Rippe oder Wulst (5) bildet, bevorzugt im Bereich ihres freien Endes (5') zu erreichen.

3. Herstellungsverfahren nach Anspruch 1 oder 2, **dadurch gekennzeichnet, dass** das erste und zweite thermoplastische Material miteinander kompatibel und vom gleichen Typ sind, **dadurch**, dass die oder jede Rippe oder Wulst (5) in einer Profilstruktur integral mit der Kante oder dem Fügekantenabschnitt (3) des ersten Teils (2) derart ausgebildet wird, dass sie eine Konfiguration aufweist, dass ihr Außenflächenbereich, der vor einem Überformen sichtbar ist, im Vergleich zum Volumen groß ist und dass ihre Basis (5"), die an der Kante oder dem Kantenabschnitt (3) anliegt, in Bezug auf den Rest der fraglichen Rippe oder Wulst (5) eine verbreiterte Form oder einen verbreiterten Querschnitt aufweist.

4. Herstellungsverfahren nach einem der Ansprüche 1 bis 3, **dadurch gekennzeichnet, dass** jede Rippe oder Wulst (5) in einem Schnitt entlang einer Ebene, die senkrecht zu ihrer Profilerstreckungsrichtung liegt, eine von der Basis (5"), die an der Kante oder dem Kantenabschnitt (3) anliegt, zum freien Ende (5') eine verjüngte Form aufweist.

5. Herstellungsverfahren nach einem der Ansprüche 1 bis 4, **dadurch gekennzeichnet, dass** die oder jede Rippe oder Wulst (5) einen Querschnitt in Form eines gleichschenkligen Dreiecks aufweist.

6. Herstellungsverfahren nach einem der Ansprüche 1 bis 5, **dadurch gekennzeichnet, dass** die Kante oder der Fügekantenabschnitt (3) des ersten Teils (2) eine Wulst oder Rippe (5) umfasst, die bevorzugt in eine im Wesentlichen zur tangentialen oder medianen Ebene (PT) der Wand des Hohlkörpers (1) im Bereich der Fügezone (4) senkrechten Richtung nach außen hervorsteht.

7. Herstellungsverfahren nach einem der Ansprüche 1 bis 5, **dadurch gekennzeichnet, dass** die Kante oder der Fügekantenabschnitt (3) des ersten Teils (2) mindestens zwei Wulste oder Rippen (5) umfasst, die im Wesentlichen in ihrer Längserstreckung parallel zueinander sind und bevorzugt in eine im Wesentlichen zur tangentialen oder medianen Ebene (PT) der Wand des Hohlkörpers (1) im Bereich der Fügezone (4) senkrechten Richtung nach außen hervorstehen.

8. Herstellungsverfahren nach einem der Ansprüche 6 und 7, **dadurch gekennzeichnet, dass** mindestens eine zusätzliche Rippe oder Wulst (7) ebenfalls im Bereich der Kante (3) oder des Fügekantenabschnitts (3) des ersten Teils (2) ausgebildet wird, wobei diese oder jede zusätzliche Rippe oder Wulst (7) in eine Richtung hervorsteht, die im Wesentlichen parallel zur oder in der tangentialen oder medianen Ebene (PT) der Wand des Hohlkörpers (1) im Bereich der Fügezone (4) liegt.

9. Herstellungsverfahren nach einem der Ansprüche 1 bis 8, **dadurch gekennzeichnet, dass** die Kante oder der Fügekantenabschnitt (3) des ersten Teils (2) mit einer Verdickung (8) ausgebildet wird, die einen nach außen weisenden Rand bildet, wobei die Rippe(n) oder Wulst(e) (5) integral auf und mit diesem Rand (8) ausgebildet werden, optional auf einer Mehrzahl ihrer Flächen (8'), wobei die Kante oder der Fügekantenabschnitt (3') des zweiten Teils (2') integral mit einer seitlichen Verlängerung (6) in Form eines Abdeckflügels ausgebildet wird, der durch mindestens teilweises, bevorzugt vollständiges Überformen über der Verdickung (8) ansetzt, um eine Rastverbindung auszubilden.

10. Herstellungsverfahren nach einem der Ansprüche 1 bis 9, **dadurch gekennzeichnet, dass** mindestens ein Bereich des ersten Teils (2) mit einer Ausnehmung, einem Durchtritt, einem Hohlraum oder dergleichen (9) ausgebildet wird, und **dadurch**, dass das zweite thermoplastische Material während das Formens des zweiten Teils (2') in diese Ausnehmung oder dergleichen (9) eindringt.

11. Herstellungsverfahren nach einem der Ansprüche 1 bis 10, **dadurch gekennzeichnet, dass** mindestens der Vorgang des Formens des ersten Teils (2) des Körpers (1) und der nachfolgende Vorgang des Überformens des zweiten Teils (2') in der gleichen Gußform durchgeführt werden, wobei diese Gußform mit zwei separaten Formungsstellen in geeigneter passender Gestalt versehen ist, oder mit einer Hohlform, die eine Konfiguration aufweist, die auf kontrollierte Weise modifiziert oder verändert werden kann.

12. Herstellungsverfahren nach einem der Ansprüche 1 bis 11, **dadurch gekennzeichnet, dass** es darin besteht, den zweiten Teil (2') mit einer zweiten Kante oder einem Fügekantenabschnitt versehen mit mindestens einer hervorstehenden Rippe oder Wulst (5) auszubilden, und nach Formen des zweiten Teils (2') mit Verbindung zum ersten Teil (2) durch Überformen, einen dritten Teil auf den zweiten Teil (2') anzuformen, wobei die zweite Kante oder der zweite Fügekantenabschnitt des zweiten Teils durch die Materialmasse, die eine Kante oder einen Fügekantenabschnitt des zweiten Teils bildet, mindestens teilweise überformt wird, wobei diese Materialmasse die mindestens eine Rippe oder Wulst der zweiten Kante oder des zweiten Fügekantenabschnitts des zweiten Teils (2') vollständig bedeckt.

13. Hohlkörper aus thermoplastischem Material, bevorzugt unter Anwendung des Herstellungsverfahrens nach einem der Ansprüche 1 bis 12 erhalten und gebildet aus zwei Teilen, die entlang ihrer benachbarten Kanten oder mindestens Abschnitten dieser Kanten zusammengefügt sind, wobei gleichzeitig eine Abdichtung im Bereich der Fügezone erzeugt ist, wobei der erste Teil (2) aus einem Formgußteil gebildet ist, das aus einem ersten thermosplastischen Material besteht und mindestens eine Rippe oder Wulst (5) umfasst, die im Bereich seiner Kante oder seines Fügekantenabschnitts (3) hervorsteht, und wobei der zweite Teil (2') aus einem Formgußteil gebildet ist, das aus einem zweiten thermoplastischen Material besteht, wobei die zweite Materialmasse, die die Kante oder den Fügekantenabschnitt (3') des zweiten Teils (2') oder eine Verlängerung (6) dieser Kante (3') bildet, die Kante oder den Fügekantenabschnitt (3) des ersten Teils (2) mindestens teilweise überformt und das zweite Material die mindestens eine Rippe oder Wulst (5) vollständig bedeckt,
wobei der Hohlkörper **dadurch gekennzeichnet ist, dass** die oder jede Rippe oder Wulst (5) im Wesentlichen eine Prismenform aufweist, deren Querschnitt dreieckförmig ist.

14. Hohlkörper nach Anspruch 13, **dadurch gekennzeichnet, dass** er einen Einlasskanal oder -verteiler für ein Fahrzeug mit einem Verbrennungsmotor bildet.

## Revendications

1. Procédé de fabrication d'une pièce creuse formée d'au moins deux parties mutuellement assemblées le long de bords adjacents respectifs, ou au moins de portions de tels bords, avec réalisation simultanée de l'étanchéité au niveau de la zone d'assemblage, le procédé consistant à réaliser une première partie (2) par moulage d'un premier matériau thermoplastique, cette première partie (2) comportant au moins une nervure ou arête (5) saillante au niveau de son bord (3) ou de sa portion de bord d'assemblage, puis à réaliser une seconde ou deuxième partie (2') par moulage sur la première partie (2) d'un second matériau thermoplastique, avec surmoulage au moins partiel du bord ou de la portion de bord d'assemblage (3) de la première partie (2) par la masse de second matériau formant le bord (3') ou la portion de bord d'assemblage de la seconde partie (2'), ou un prolongement (6) de ce bord (3), ledit second matériau recouvrant entièrement ladite au moins une nervure ou arête (5),
le procédé étant **caractérisé en ce que** la première portion (2) est réalisée avec la ou chaque nervure ou arête (5) présentant une forme sensiblement prismatique avec une section transversale en forme de triangle.

2. Procédé de fabrication selon la revendication 1, **caractérisé en ce que** la quantité de chaleur amenée par la masse de second matériau formant le bord (3') ou la portion de bord d'assemblage de la seconde partie (2'), ou un prolongement (6) de ce bord (3), et venant en contact avec ladite au moins une nervure ou arête (5), est suffisante pour obtenir une refonte ou fusion au moins partielle du matériau constitutif de cette ou de chaque nervure ou arête (5), préférentiellement au niveau de son extrémité libre (5').

3. Procédé de fabrication selon la revendication 1 ou 2, **caractérisé en ce que** les premiers et seconds matériaux thermoplastiques sont compatibles entre eux et de même nature, **en ce que** la ou chaque nervure ou arête (5) à structure profilée est formée intégralement avec le bord ou la portion de bord d'assemblage (3) de la première partie (2) en présentant une conformation telle que sa surface extérieure apparente avant surmoulage est importante par rapport à son volume et que sa base (5") attenante au bord ou à la portion de bord (3) présente une forme ou une section élargie, par rapport au reste de la nervure ou arête (5) concernée.

4. Procédé de fabrication selon l'une quelconque des revendications 1 à 3, **caractérisé en ce que** la ou chaque nervure ou arête (5) présente, en section selon un plan perpendiculaire à sa direction d'extension profilée, une forme effilée de sa base (5") attenante au bord ou à la portion de bord (3) vers son extrémité libre (5').

5. Procédé de fabrication selon l'une quelconque des revendications 1 à 4, **caractérisé en ce que** la ou chaque nervure ou arête (5) présente une section transversale de forme triangulaire isocèle.

6. Procédé de fabrication selon l'une quelconque des revendications 1 à 5, **caractérisé en ce que** le bord ou la portion de bord d'assemblage (3) de la première partie (2) comporte une arête ou nervure (5) saillante vers l'extérieur, préférentiellement dans une direction sensiblement perpendiculaire au plan (PT) tangent à ou médian de la paroi de la pièce creuse (1) au niveau de la zone d'assemblage (4).

7. Procédé de fabrication selon l'une quelconque des revendications 1 à 5, **caractérisé en ce que** le bord ou la portion de bord d'assemblage (3) de la première partie (2) comporte au moins deux arêtes ou nervures (5) sensiblement parallèles entre elles dans leur extension longitudinale et saillantes vers l'extérieur, préférentiellement dans une direction sensiblement perpendiculaire au plan (PT) tangent à ou médian de la paroi de la pièce creuse (1) au niveau de la zone d'assemblage (4).

8. Procédé de fabrication selon l'une quelconque des revendications 6 et 7, **caractérisé en ce qu'**au moins une nervure ou arête supplémentaire (7) est également formée au niveau du bord (3) ou de la portion de bord d'assemblage (3) de la première partie (2), cette ou chaque nervure ou arête supplémentaire (7) étant saillante dans une direction sensiblement parallèle au ou comprise dans le plan (PT) tangent à ou médian de la paroi de la pièce creuse (1) au niveau de la zone d'assemblage (4).

9. Procédé de fabrication selon l'une quelconque des revendications 1 à 8, **caractérisé en ce que** le bord ou la portion de bord d'assemblage (3) de la première partie (2) est formée avec un épaississement (8) constituant un rebord dirigé vers l'extérieur, la ou les nervure(s) ou arête(s) (5) étant formée(s) intégralement sur et avec ce rebord (8), le cas échéant sur plusieurs faces (8') de ce dernier, le bord ou la portion de bord d'assemblage (3') de la seconde partie (2') étant formé intégralement avec un prolongement (6) latéral en forme d'aile de recouvrement, venant en prise par surmoulage au moins partiellement, préférentiellement totalement, par-dessus ledit épaississement (8) en vue de constituer une liaison d'accrochage.

10. Procédé de fabrication selon l'une quelconque des revendications 1 à 9, **caractérisé en ce qu'**au moins une région de la première partie (2) est formée avec un renfoncement, un passage, une cavité ou analogue (9) et **en ce que** le second matériau thermoplastique pénètre dans ce renfoncement ou analogue (9) lors du moulage de la seconde partie (2').

11. Procédé de fabrication selon l'une quelconque des revendications 1 à 10, **caractérisé en ce que** l'opération de moulage de la première partie (2) de la pièce (1) et l'opération consécutive de surmoulage de la seconde partie (2') sont réalisées dans le même moule, ce dernier étant pourvu de deux emplacements séparés de moulage, de formes conjuguées adaptées, ou d'une cavité de moulage à configuration modifiable ou variable de manière contrôlée.

12. Procédé de fabrication selon l'une quelconque des revendications 1 à 11, **caractérisé en ce qu'**il consiste à former la deuxième partie (2') avec un(e) second(e) bord ou portion de bord d'assemblage pourvu(e) d'au moins une nervure ou arête saillante (5), et, après moulage de la deuxième partie (2') avec raccordement par surmoulage avec la première partie (2), à mouler une troisième partie sur ladite deuxième partie (2'), avec surmoulage au moins partiel dudit second bord ou de ladite seconde portion de bord d'assemblage de la deuxième partie par la masse de matériau formant un bord ou une portion de bord d'assemblage de ladite troisième partie, cette masse de matériau recouvrant entièrement ladite au moins une nervure ou arête dudit second bord ou de ladite seconde portion de bord d'assemblage de ladite deuxième partie (2').

13. Pièce creuse en matériau(x) thermoplastique(s), préférentiellement obtenue au moyen du procédé de fabrication selon l'une quelconque des revendications 1 à 12 et constituée de deux parties assemblées entre elles le long de bords adjacents respectifs ou au moins de portions de tels bords, avec réalisation simultanée d'une étanchéité au niveau de la zone d'assemblage,
la première partie (2) consistant en une partie venue de moulage d'un premier matériau thermoplastique et comportant au moins une nervure ou arête (5) saillante au niveau de son bord ou de sa portion de bord d'assemblage (3), et
la seconde partie (2') consistant en une partie venue de moulage d'un second matériau thermoplastique,
la masse de second matériau formant le bord ou la portion de bord d'assemblage (3') de la seconde partie (2'), ou un prolongement (6) de ce bord (3'), surmoulant au moins partiellement le bord ou la portion de bord d'assemblage (3) de la première partie (2), en recouvrant entièrement ladite au moins une nervure ou arête (5),
la pièce creuse étant **caractérisée en ce que** la ou chaque nervure ou arête (5) présente une forme sensiblement prismatique, avec une section transversale de forme triangulaire.

14. Pièce creuse selon la revendication 13, **caractérisée en ce qu'**elle consiste en un collecteur ou répartiteur d'admission pour véhicule à moteur à combustion interne.
